(19) Europäisches Patentamt
European Patent Office
Office européen des brevets

(11) EP 4 245 539 A1

(12) EUROPEAN PATENT APPLICATION
published in accordance with Art. 153(4) EPC

(43) Date of publication:
**20.09.2023 Bulletin 2023/38**

(21) Application number: **21900471.0**

(22) Date of filing: **24.11.2021**

(51) International Patent Classification (IPC):
***B33Y 10/00*** *(2015.01)* ***B33Y 80/00*** *(2015.01)*
***B29C 64/106*** *(2017.01)* ***B29C 64/40*** *(2017.01)*

(52) Cooperative Patent Classification (CPC):
**B29C 64/106; B29C 64/40; B33Y 10/00; B33Y 80/00**

(86) International application number:
**PCT/JP2021/043062**

(87) International publication number:
**WO 2022/118717 (09.06.2022 Gazette 2022/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.12.2020 JP 2020200639**

(71) Applicant: **Mitsui Chemicals, Inc.**
**Tokyo 104-0028 (JP)**

(72) Inventors:
- **KONDO, Yuki**
  **Sodegaura-shi, Chiba 299-0265 (JP)**
- **TAKEUCHI, Fumito**
  **Sodegaura-shi, Chiba 299-0265 (JP)**
- **MIYATA, Mikiko**
  **Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

# (54) SHAPED ARTICLE MANUFACTURING METHOD AND SHAPED ARTICLE

(57) The present invention provides a method of producing a modeled object by material extrusion using a 3D printer, the 3D printer including a modeling stage having a placement surface for placing the modeled object thereon, the method including: forming at least one first modeling layer on a surface of a modeling sheet disposed on the placement surface, using a molten product of a first modeling layer material; and forming at least one second modeling layer on the at least one first modeling layer, using a molten product of a second modeling layer material, wherein the first modeling layer material is different from the second modeling layer material.

EP 4 245 539 A1

## Description

Technical Field

The present disclosure relates to a method of producing a modeled object, and a modeled object.

Background Art

In recent years, material extrusion (MEX) is drawing attention as one of the efficient modeling techniques. In material extrusion, a molten product of a modeling layer material is extruded through an extrusion nozzle to form a modeling layer, and extruded modeling layers are layered to materialize a modeled object, based on 3D model data.

In material extrusion, at least one modeling layer (hereinafter, referred to as "base modeling layer") formed before the formation of a new modeling layer, serves as a base for the new modeling layer. When warpage occurs in the base modeling layer during a modeling cycle in material extrusion, there is a risk that modeling defects may occur.

Conventionally, a modeling sheet has been used in order to reduce the warpage of the base modeling layer during the modeling cycle in material extrusion (for example, Japanese National-Phase Publication (JP-A) No. 2017-502852, etc.). Such a modeling sheet is made of a material consisting of a resin with which the resulting modeled object is weldable. A 3D printer includes a modeling stage having a placement surface for placing the modeled object thereon. The modeling sheet is fixed on the placement surface of the modeling stage. The modeled object is formed by additive manufacturing (namely, lamination modeling) on a surface of the modeling sheet, and is welded to the modeling sheet. The modeled object that has been welded to the modeling sheet is separated from the modeling sheet, for example, by hand using a scraper or the like.

SUMMARY OF INVENTION

Technical Problem

However, the modeled object formed by additive manufacturing on the surface of the modeling sheet is firmly welded to the modeling sheet. Therefore, a great amount of time may be required for separating the modeled object that has been welded to the modeling sheet from the modeling sheet. Specifically, there is a case in which five or more hours are required to separate a modeled object in the form of a rectangular parallelepiped (size: 400 mm W × 400 mm D) that has been welded to the modeling sheet from the modeling sheet by hand, using a scraper.

The present disclosure has been made in view of the above-described circumstances.

An object of one embodiment of the present disclosure is to provide a method of producing a modeled object, which is capable of producing a modeled object whose warpage is reduced as compared to a case in which a modeling sheet is not used, and which allows for separating the modeled object that has been welded to the modeling sheet from the modeling sheet in a shorter period of time.

An object of another embodiment of the present disclosure is to provide a modeled object whose warpage is reduced.

Solution to Problem

Specific means for achieving the objects described above include the following embodiments.

<1> A method of producing a modeled object by material extrusion using a 3D printer, the 3D printer including a modeling stage having a placement surface for placing the modeled object thereon, the method including:

forming at least one first modeling layer on a surface of a modeling sheet disposed on the placement surface, using a molten product of a first modeling layer material; and
forming at least one second modeling layer on the at least one first modeling layer, using a molten product of a second modeling layer material,
wherein the first modeling layer material is different from the second modeling layer material.

<2> The method of producing a modeled object according to claim 1, wherein the first modeling layer material includes a first thermoplastic resin and an inorganic filler.

<3> The method of producing a modeled object according to claim 2, wherein a content of the inorganic filler is from 25% by mass to 80% by mass with respect to a total mass of the first modeling layer material.

<4> The method of producing a modeled object according to claim 2 or claim 3, wherein the second modeling layer material includes a second thermoplastic resin that is weldable with the first thermoplastic resin.
<5> The method of producing a modeled object according to any one of claims 2 to 4, wherein the modeling sheet includes a third thermoplastic resin that is weldable with the first thermoplastic resin.
<6> The method of producing a modeled object according to any one of claims 2 to 5, wherein:

the first modeling layer material includes the first thermoplastic resin,
the second modeling layer material includes a second thermoplastic resin that is weldable with the first thermoplastic resin,
the modeling sheet includes a third thermoplastic resin that is weldable with the first thermoplastic resin, and
at least one selected from the group consisting of the first thermoplastic resin, the second thermoplastic resin, and the third thermoplastic resin includes a crystalline thermoplastic resin.

<7> The method of producing a modeled object according to claim 6, wherein the crystalline thermoplastic resin includes a propylene-based polymer.
<8> A method of producing a modeled object by material extrusion using a 3D printer, the 3D printer including a modeling stage having a placement surface for placing the modeled object thereon, the method including:
forming at least one modeling layer on a surface of a modeling sheet disposed on the placement surface, using a molten product of a modeling layer material, wherein:

the modeling layer material includes a first thermoplastic resin, and
the modeling sheet includes a second thermoplastic resin and an inorganic filler.

<9> The method of producing a modeled object according to claim 8, wherein a content of the inorganic filler is from 25% by mass to 80% by mass with respect to a total mass of the modeling sheet.
<10> The method of producing a modeled object according to claim 8 or claim 9, wherein the second thermoplastic resin is weldable with the first thermoplastic resin.
<11> The method of producing a modeled object according to any one of claims 2 to 10, wherein the inorganic filler includes at least one selected from the group consisting of talc, calcium carbonate, and magnesium sulfate.
<12> A modeled object, including a plurality of modeling layers disposed one on another in layers in a first direction, wherein a material of a surface modeling layer, which is a modeling layer located at one end in the first direction, of the plurality of modeling layers, is different from a material of another modeling layer excluding the surface modeling layer.
<13> The modeled object according to claim 12, wherein the surface modeling layer includes a first thermoplastic resin and an inorganic filler.
<14> The modeled object according to claim 13, wherein a content of the inorganic filler is from 25% by mass to 80% by mass with respect to a total mass of the surface modeling layer.
<15> The modeled object according to claim 13 or claim 14, wherein the other modeling layer includes a second thermoplastic resin that is weldable with the first thermoplastic resin.

## Advantageous Effects of Invention

One embodiment according to the present disclosure provides a method of producing a modeled object, which is capable of producing a modeled object whose warpage is reduced as compared to a case in which a modeling sheet is not used, and which allows for separating the modeled object that has been welded to the modeling sheet from the modeling sheet in a shorter period of time.
Another embodiment of the present disclosure provides a modeled object whose warpage is reduced.

## BRIEF DESCRIPTION OF DRAWINGS

FIG. 1 is a side view showing a modeled object, a modeling sheet, and a modeling stage for illustrating one example of a method of producing a modeled object according to a first embodiment of the present disclosure.
FIG. 2 is a perspective photograph of a honeycomb-modeled object for measurement, produced in Example 1.
FIG. 3 is a side view of the honeycomb-modeled object for measurement, for illustrating average amount of curvature Y

DESCRIPTION OF EMBODIMENTS

In the present specification, any numerical range indicated using an expression "from * to" refers to a range in which numerical values described before and after the "to" are included as a lower limit value and an upper limit value, respectively.

In a numerical range described in stages in the present disclosure, the upper limit value or the lower limit value described in one numerical range may be replaced with the upper limit value or the lower limit value of another numerical range described in stages. Further, in a numerical range described in the present disclosure, the upper limit value or the lower limit value of the numerical range may be replaced with a value shown in Examples.

In the present disclosure, each component may contain a plurality of substances corresponding to the component. In the case of referring to the amount of each component in a composition in the present disclosure, and in a case in which a plurality of substances corresponding to each component are present in the composition, the amount of each component refers to the total amount of the plurality of substances present in the composition.

In the present disclosure, a combination of two or more preferred embodiments is a more preferred embodiment.

In the present disclosure, "a second thermoplastic resin that is weldable with a first thermoplastic resin" refers to such a resin that the molten product of the second thermoplastic resin adheres to the molten product of the first thermoplastic resin in close contact without being separated therefrom, in an atmosphere in which at least one selected from the group consisting of the first thermoplastic resin and the second thermoplastic molten product, and that the second thermoplastic resin is not separated from the first thermoplastic resin, in an atmosphere in which at least one selected from the group consisting of the first thermoplastic resin and the second thermoplastic resin does not melt.

Further, "a third thermoplastic resin weldable with the first thermoplastic resin" refers to such a resin that the molten product of the third thermoplastic resin adheres to the molten product of the first thermoplastic resin in close contact without being separated therefrom, in an atmosphere in which at least one selected from the group consisting of the first thermoplastic resin and the third thermoplastic molten product, and that the third thermoplastic resin is not separated from the first thermoplastic resin, in an atmosphere in which at least one selected from the group consisting of the first thermoplastic resin and the third thermoplastic resin does not melt.

(1) First Embodiment

A method of producing a modeled object according to a first embodiment of the present disclosure (hereinafter, referred to as "first production method") will be described.

The first production method is a method of producing a modeled object by material extrusion using a 3D printer, the 3D printer including a modeling stage having a placement surface for placing the modeled object thereon.

The first production method includes: forming (hereinafter, referred to as "first modeling layer forming step") at least one first modeling layer (hereinafter, also referred to as "first modeling layer structure") on the surface of a modeling sheet disposed on the placement surface of the modeling stage, using a molten product of a first modeling layer material; and forming (hereinafter, referred to as "second modeling layer forming step") at least one second modeling layer (hereinafter, also referred to as "second modeling layer structure") on the surface of the at least one first modeling layer, using a molten product of a second modeling layer material. The first modeling layer material is different from the second modeling layer material.

The first modeling layer forming step and the second modeling layer forming step are hereinafter collectively referred to as "modeling layer forming step".

According to the first production method, it is possible to produce a modeled object whose warpage is reduced as compared to a case in which a modeling sheet is not used, and to separate the modeled object that has been welded to the modeling sheet from the modeling sheet in a shorter period of time. This is assumed to be due to the following reasons.

In the first production method, the first modeling layer structure is formed on the surface of a modeling sheet disposed on the modeling stage, with the molten product of the first modeling layer material. By this arrangement, the lowermost layer of the first modeling layer structure is welded to the modeling sheet. In other words, the first modeling layer structure and the modeling sheet are integrated. The modeling sheet is disposed on the placement surface of the modeling stage. Therefore, the warpage of the first modeling layer structure is reduced.

Further, in the first production method, the second modeling layer structure is formed on the surface of the first modeling layer structure, with the molten product of the second modeling layer material. By this arrangement, for example, the lowermost layer of the second modeling layer structure is welded to the uppermost layer of the first modeling layer structure. In other words, the second modeling layer structure, the first modeling layer structure and the modeling sheet are integrated. Therefore, the warpage of the second modeling layer structure is reduced.

As a result, the warpage of the modeled object welded to the modeling sheet is reduced as compared to a modeled object that has been formed by additive manufacturing directly on the placement surface of the modeling stage.

Moreover, the first modeling layer material is different from the second modeling layer material, in the first production method. Therefore, the modeled object that has been welded to the modeling sheet can be more easily separated from the modeling sheet, as compared to a case in which the first modeling layer material and the second modeling layer material are the same.

As a result, the modeled object that has been welded to the modeling sheet can be separated from the modeling sheet in a shorter period of time, in the first production method.

In this manner, the first production method enables to produce a modeled object whose warpage is reduced as compared to a case in which a modeling sheet is not used, and to separate the modeled object that has been welded to the modeling sheet from the modeling sheet in a shorter period of time.

A modeled object produced by the first production method will be described below with reference to drawings. The configurations shown in the drawings are for illustrating embodiments, and do not limit the scope of the embodiments.

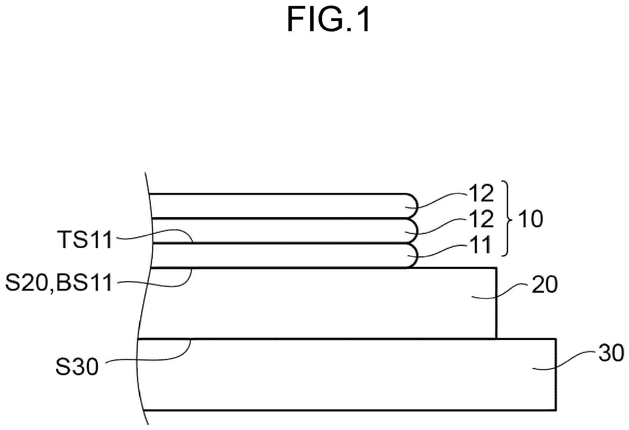

The modeled object produced by the first production method preferably has a configuration shown in FIG. 1.

FIG. 1 is a side view showing a modeled object 10, a modeling sheet 20 and a modeling stage 30 for illustrating one example of the first production method. In FIG. 1, the reference numeral 10 indicates the modeled object, the reference numeral 11 indicates the first modeling layer, each reference numeral 12 indicates the second modeling layer, the reference numeral 20 indicates the modeling sheet, the reference numeral 30 indicates the modeling stage, the reference numeral TS11 indicates the surface of the uppermost layer of at least one first modeling layer, the reference numeral BS11 indicates the lower surface of the lowermost layer of at least one first modeling layer, the reference numeral S20 indicates the surface of the modeling sheet 20, and the reference numeral S30 indicates the placement surface of the modeling stage 30.

As shown in FIG. 1, the first production method is a method of producing the modeled object 10 by material extrusion using a 3D printer, the 3D printer including the modeling stage 30 having the placement surface S30 for placing the modeled object 10 thereon.

The first production method includes: forming at least one first modeling layer 11 on the surface S20 of the modeling sheet 20 disposed on the placement surface S30 of the modeling stage 30, with the molten product of the first modeling layer material; and forming at least one second modeling layer 12 on the surface TS11 of the at least one first modeling layer 11, with the molten product of the second modeling layer material. The first modeling layer material is different from the second modeling layer material.

While one first modeling layer 11 is provided in the configuration shown in FIG. 1, it is necessary that at least one first modeling layer 11 is provided, and a plurality of the first modeling layers 11 may be provided. Further, while two second modeling layers 12 are provided in the configuration shown in FIG. 1, it is necessary that at least one second modeling layer 12 is provided, and three or more second modeling layers 12 may be provided.

The fact that the first modeling layer material is different from the second modeling layer material means that the composition of components contained in the first modeling layer material is different from that in the second modeling layer material.

For example, it is regarded that the first modeling layer material is different from the second modeling layer material, in a case in which at least one selected from the group consisting of the type and the incorporated amount of a resin contained in the first modeling layer material, the presence or absence of an inorganic filler in the material, and, when an inorganic filler is contained, the type and the incorporated amount of the inorganic filler, is different from that in the second modeling layer material.

For example, a thermoplastic plastic and a thermoplastic elastomer are determined as different resin types, even in a case in which the resins contained in the respective materials both belong to thermoplastic resins, and the resins are polymers having structural units derived from the same monomer.

The first production method will now be described in detail. In the following description, reference numerals are omitted.

In one embodiment, the first production method may be a method of producing a modeled obj ect, in which: the first modeling layer material contains the first thermoplastic resin, the second modeling layer material contains the second thermoplastic resin that is weldable with the first thermoplastic resin; the modeling sheet contains the third thermoplastic resin that is weldable with the first thermoplastic resin, and at least one selected from the group consisting of the first thermoplastic resin, the second thermoplastic resin and the third thermoplastic resin contains a crystalline thermoplastic resin; from the viewpoints of further reducing the warpage of the resulting modeled object and separating the modeled object from the modeling sheet in a shorter period of time.

(1.1) Additive Manufacturing Step

As described above, the first production method includes the first modeling layer forming step, and the second modeling layer forming step. The first modeling layer forming step and the second modeling layer forming step are executed in the order mentioned. By executing the first modeling layer forming step and the second modeling layer forming step, the modeled object welded to the modeling sheet can be obtained.

A 3D printer is used in the additive manufacturing step. The 3D printer includes, for example, a first extrusion nozzle, a second extrusion nozzle, and a modeling stage. The modeling stage has a placement surface for placing the resulting modeled object thereon. As shown in FIG. 1, the modeling sheet is disposed on the placement surface of the modeling stage. The details of the 3D printer and the modeling sheet will be described later.

(1.1.1) First Modeling Layer Forming Step

In the first modeling layer forming step, the first modeling layer structure is formed on the surface of the modeling sheet, with the molten product of the first modeling layer material. The lowermost layer of the first modeling layer structure is welded to the modeling sheet.

The first modeling layer structure may be formed, for example, by extruding the molten product of the first modeling layer material through the first extrusion nozzle.

The first extrusion nozzle needs to be set to a nozzle temperature at which the first modeling layer material melts, and the nozzle temperature can be adjusted as appropriate depending on the type of the first modeling layer material, and the like. The temperature at which the first modeling layer material is melted may be, for example, a temperature that is from 10°C to 150°C higher with respect to either the melting point or the glass transition temperature (Tg) of the first thermoplastic resin which is higher. The first thermoplastic resin will be described later.

The first modeling layer is set to a lamination pitch which can be adjusted as appropriate depending on the dimensions of the resulting modeled object, and the like. The lamination pitch of the first modeling layer is preferably equal to or lower than 3/4 of the nozzle diameter of the first extrusion nozzle, and more preferably equal to or lower than 1/2 of the nozzle diameter, from the viewpoint of improving interlayer bond strength. The lamination pitch of the first modeling layer corresponds to the thickness per layer of the first modeling layer.

The first modeling layer structure may have a filling rate of 100%, or less than 100%. The filling rate indicates the percentage of the volume of the modeling layer material in unit space volume.

The total thickness of the first modeling layer structure can be adjusted as appropriate depending on the size of the resulting modeled object, and the like. The lamination pitch of the first modeling layer structure is preferably equal to or lower than 3/4 of the nozzle diameter, and more preferably equal to or lower than 1/2 of the nozzle diameter, from the viewpoint of improving the interlayer bond strength.

The number of the first modeling layers can be selected as appropriate depending on the thickness of the first modeling layer, the lamination pitch of the first modeling layer, and the like, and one, or two or more layers of the first modeling layers may be provided.

(1.1.2) Second Modeling Layer Forming Step

In the second modeling layer forming step, the second modeling layer structure is formed on the first modeling layer structure, with the molten product of the second modeling layer material. The second modeling layer structure is preferably formed on the surface of the uppermost layer of the first modeling layer structure. The lowermost layer of the second modeling layer structure may be welded to the uppermost layer of the first modeling layer structure. The second modeling layer structure constitutes a main portion of the resulting modeled object.

The second modeling layer structure may be formed, for example, by extruding the molten product of the second modeling layer material through the second extrusion nozzle.

The second extrusion nozzle needs to be set to a nozzle temperature at which the second modeling layer material melts, and the nozzle temperature can be adjusted as appropriate depending on the type of the second modeling layer material, and the like. The temperature at which the second modeling layer material is melted may be, for example, a temperature that is from 10°C to 150°C higher with respect to either the melting point or the glass transition temperature (Tg) of the second thermoplastic resin which is higher. The second thermoplastic resin will be described later.

The lamination pitch of the second modeling layer can be adjusted as appropriate depending on the nozzle diameter of the second extrusion nozzle, and the like. The lamination pitch of the second modeling layer is preferably equal to or lower than 3/4 of the nozzle diameter, and more preferably equal to or lower than 1/2 of the nozzle diameter, from the viewpoint of improving the interlayer bond strength. The lamination pitch of the second modeling layer corresponds to the thickness per layer of the second modeling layer.

The filling rate of the second modeling layer structure can be selected as appropriate depending on the desired modeled object to be formed, and the like, and may be 100%, or less than 100%.

The total thickness of the second modeling layer structure can be adjusted as appropriate depending on the size of the resulting modeled object, and the like.

The number of the second modeling layers needs to be one or more, and can be selected as appropriate depending on 3D model data, the thickness of the second modeling layer, the lamination pitch of the second modeling layer, and the like. One, or two or more layers of the second modeling layers may be provided.

(1.2) Separation Step

The first production method may further include a separation step. In a case in which the first production method further includes a separation step, the separation step is executed after the first modeling layer forming step and the second modeling layer forming step have been executed.

In the separation step, the modeling sheet is separated from the modeled object welded to the modeling sheet. In this manner, the modeled object is obtained.

The method of separating the modeling sheet from the modeled object welded to the modeling sheet is not particularly limited. For example, it is preferred to separate the modeling sheet from the modeled object welded to the modeling sheet, by scraping the interface between the modeling sheet and the first modeling layer structure, using a scraper. In the first production method, the modeling sheet can be separated from the modeled object welded to the modeling sheet using a scraper, in a shorter period of time.

The "interface between the modeling sheet and the first modeling layer structure" refers to the contact surface between the surface of the modeling sheet and the lower surface of the lowermost layer of the first modeling layer structure.

(1.3) First Modeling Layer Material

The first modeling layer material is a feedstock for the first modeling layer.

The first modeling layer material preferably contains a first thermoplastic resin and an inorganic filler. This facilitates the interlayer bond strength between the first modeling layer structure and the modeling sheet to be relatively lower with respect to the interlayer bond strength between the second modeling layer structure and the modeling sheet, making it easier to separate the modeled object that has been welded to the modeling sheet from the modeling sheet in a shorter period of time.

In the first production method, the lower limit value of the content of the inorganic filler is preferably 25% by mass or more, more preferably 30% by mass or more, and still more preferably 50% by mass or more, with respect to the total mass of the first modeling layer material. The upper limit value of the content of the inorganic filler is preferably 80% by mass or less, and more preferably 70% by mass or less, with respect to the total mass of the first modeling layer material.

When the content of the inorganic filler is 25% by mass or more, it facilitates the interlayer bond strength between the first modeling layer structure and the modeling sheet to be relatively lower with respect to the interlayer bond strength between the second modeling layer structure and the modeling sheet, making it easier to separate the modeled object that has been welded to the modeling sheet from the modeling sheet in a shorter period of time. For example, the interface between the modeling sheet and the modeled object can be more easily delaminated using a scraper, further facilitating the separation of the modeled object.

When the upper limit value of the content of the inorganic filler is 80% by mass or less, the inorganic filler is less likely to be detached from the first modeling layer.

Based on the above-described points of view, the content of the inorganic filler is preferably from 25% by mass to 80% by mass, and more preferably from 30% by mass to 70% by mass, with respect to the total mass of the first modeling layer material. When the content of the inorganic filler is within a range of from 30% by mass to 70% by mass, in particular, a further improved balance between the period of time required for separating the modeled object that has been welded to the modeling sheet from the modeling sheet (hereinafter, referred to as "separation time") and the average amount of curvature of the resulting modeled object can be obtained. Each of the separation time and the average amount of curvature of the modeled object is measured in the same manner as the method described in Examples.

(1.3.1) Inorganic Filler

The inorganic filler may be made of any material without particular limitation as long as the material is an inorganic compound, and a known inorganic filler can be used. The inorganic filler may be, for example, an oxide-based filler, a hydroxide-based filler, a silicate-based filler, a sedimentary rock-based filler, a clay mineral-based filler, a magnetic filler, an electrically conductive filler, a thermally conductive filler, sulfate-based filler, a sulfite-based filler, a carbonate-based filler, or a titanate-based filler.

Examples of the oxide-based filler include carbon black surface treated with a silane coupling agent or the like, carbon black, graphite, fine powdered silicic acid, silica, alumina, iron oxide, ferrite, magnesium oxide, titanium oxide, antimony trioxide, zirconium oxide, barium oxide, and calcium oxide. Examples of the silica include fumed silica, precipitated silica, diatomaceous earth, and quartz.

Examples of the hydroxide-based filler include aluminum hydroxide, and magnesium hydroxide.

Examples of the silicate-based filler include aluminum silicate (hereinafter, also referred to as "clay"; including hydrated aluminum silicate), magnesium silicate (including hydrated magnesium silicate (hereinafter also referred to as "talc")), mica, kaolin, calcium silicate (including hydrated calcium silicate), glass fibers, glass flakes, and glass beads.

Examples of the sedimentary rock-based filler include diatomaceous earth and limestone.

Examples of the clay mineral-based filler include montmorillonite, magnesian montmorillonite, iron montmorillonite, iron magnesian montmorillonite, beidellite, aluminian beidellite, nontronite, aluminian nontronite, saponite, aluminian saponite, hectorite, sauconite, stevensite, and bentonite.

Examples of the magnetic filler include ferrite, iron, and cobalt.

Examples of the electrically conductive filler include silver, gold, copper, and alloys of these metals.

Examples of the thermally conductive filler include aluminum nitride, boron nitride, and silicon carbide.

Examples of the sulfate-based filler include aluminum sulfate, magnesium sulfate, barium sulfate, and calcium sulfate.

Examples of the sulfite-based filler include calcium sulfite.

Examples of the carbonate-based filler include calcium carbonate, basic magnesium carbonate, and dolomite.

Examples of the titanate-based filler include barium titanate, and potassium titanate.

The inorganic filler preferably includes at least one selected from the group consisting of talc, calcium carbonate, and magnesium sulfate.

The deformation (particularly warpage) of a modeled object formed using the first modeling layer material containing the inorganic filler is further reduced, because of the fact that changes in the volume of the inorganic filler do not occur at the nozzle temperature of the first extrusion nozzle, and that the inorganic filler has a thermal expansion coefficient lower than the thermal expansion coefficient of the first thermoplastic resin. The fact that changes in the volume of the inorganic filler do not occur at the nozzle temperature of the first extrusion nozzle means that the inorganic filler does not melt, the inorganic filler does not dissolve and the phase transition of the inorganic filler does not occur, at the nozzle temperature of the first extrusion nozzle.

A modeled object formed using the first modeling layer material containing talc has an excellent appearance smoothness after being removed from the modeling sheet, and can be separated from the modeling sheet in a short period of time.

In a modeled object formed using the first modeling layer material containing calcium carbonate, the warpage of the modeled object is further reduced. Further, the modeled object formed using the first modeling layer material containing calcium carbonate has an excellent whiteness, and a high design.

In a modeled object formed using the first modeling layer material containing magnesium sulfate, the warpage of the modeled object is further reduced, and the modeled object can be separated from the modeling sheet in a shorter period of time.

The shape of the inorganic filler is not particularly limited, and may be, for example, in the form of spheres, plates, scales, needles, or fibers.

The inorganic filler has a volume average particle size whose upper limit value is preferably 30 μm or less, and more preferably 10 μm or less. The lower limit value of the volume average particle size of the inorganic filler is preferably 0.5 μm or more, and more preferably 1 μm or more.

The volume average particle size of the inorganic filler refers, when the volume of each particle based on the particle size of each particle, as measured using a particle size distribution analyzer such as a laser diffraction scattering particle size distribution analyzer in a state where the inorganic filler is dispersed in water, is accumulated from the side of smaller particle size, to a particle size value at which the cumulative volume of the filler reaches 50% of the total volume thereof.

(1.3.2) First Thermoplastic Resin

The first thermoplastic resin preferably contains at least one of a thermoplastic plastic or a thermoplastic elastomer, and more preferably contains both a thermoplastic plastic and a thermoplastic elastomer.

When the first thermoplastic resin contains a thermoplastic plastic and a thermoplastic elastomer, the deformation of the first modeling layer structure is more effectively reduced.

The first thermoplastic resin preferably contains a crystalline thermoplastic resin, from the viewpoints of further reducing the warpage of the resulting modeled object and separating the modeled object from the modeling sheet in a shorter period of time.

The "thermoplastic plastic" refers to a thermoplastic resin having a tensile elastic modulus at 25°C of $6.0 \times 10^8$ Pa or more. The "thermoplastic elastomer" refers to a thermoplastic resin having a tensile elastic modulus at 25°C of less than $6.0 \times 10^8$ Pa.

The tensile elastic modulus is a value measured in accordance with JIS K7161-2: 2014.

(1.3.2.1) Thermoplastic Plastic

The thermoplastic plastic has a low rubber-like elasticity and is less susceptible to deformation. The "rubber-like elasticity" refers to the property of a resin that the shape of the resin is deformed when a load is applied thereto, and the resin attempts to restore the original shape thereof when the load is removed.
The thermoplastic plastic is not particularly limited, and a known thermoplastic plastic can be used. The thermoplastic plastic may be used singly, or in combination of two or more kinds thereof.
The thermoplastic plastic may be, for example, a general-purpose plastic, an engineering plastic, or a super engineering plastic.
Examples of the general-purpose plastic include high-density polyethylene (HDPE), low-density polyethylene (LDPE), propylene-based polymers (such as propylene homopolymer (PP)), polyvinyl chloride (PVC), polyvinylidene chloride, polystyrene (PS), polyvinyl acetate (PVAc), polytetrafluoroethylene (PTFE), acrylonitrile-butadiene-styrene resins (ABS resins), styrene-acrylonitrile copolymers (AS resins), and acrylic resins (such as PMMA).
Examples of the engineering plastic include polyamides (PA), polyacetal (POM), polycarbonates (PC), modified polyphenylene ethers (m-PPE, modified PPE and PPO), polybutylene terephthalate (PBT), polyethylene terephthalate (PET), syndiotactic polystyrene (SPS), and cyclic polyolefins (COP).
Examples of the super engineering plastic include polyphenylene sulfide (PPS), polytetrafluoroethylene (PTFE), polysulfone (PSF), polyether sulfone (PES), amorphous polyarylate (PAR), polyether ether ketone (PEEK), thermoplastic polyimides (PI), and polyamideimide (PAI).
Among these, the first thermoplastic resin preferably contains, as the thermoplastic plastic(s), one or more selected from the group consisting of high-density polyethylene (HDPE), a propylene-based polymer, a polyamide (PA), polybutylene terephthalate (PBT), syndiotactic polystyrene (SPS), polyphenylene sulfide (PPS) and polyacetal (POM), and more preferably contains a propylene-based polymer, from the viewpoints of further reducing the warpage of the resulting modeled object and separating the modeled object from the modeling sheet in a shorter period of time.
The first thermoplastic resin preferably contains, as the thermoplastic plastic, at least one of a crystalline thermoplastic plastic or an amorphous thermoplastic plastic, and more preferably contains a crystalline thermoplastic plastic, from the viewpoints of further reducing the warpage of the resulting modeled object and separating the modeled object from the modeling sheet in a shorter period of time. When the first thermoplastic resin contains a crystalline thermoplastic plastic, as the thermoplastic plastic, the resulting modeled object has an excellent balance between mechanical strength and impact resistance. The crystalline thermoplastic plastic is one example of the crystalline thermoplastic resin.
The first thermoplastic resin more preferably contains, as the crystalline thermoplastic plastic, at least one selected from the group consisting of high-density polyethylene (HDPE), a propylene-based polymer, a polyamide (PA), polybutylene terephthalate (PBT), syndiotactic polystyrene (SPS), polyphenylene sulfide (PPS) and polyacetal (POM), and still more preferably contains a propylene-based polymer.
The "crystalline" as in the crystalline thermoplastic plastic means that an endothermic peak is observed in differential scanning calorimetry. The "amorphous" as in the amorphous thermoplastic plastic means that no clear endothermic peak is observed in differential scanning calorimetry.
The propylene-based polymer is a polymer having at least propylene as a structural unit.
The propylene-based polymer may be a homopolymer of propylene, or a copolymer of propylene and another monomer(s). In a case in which the propylene-based polymer is a copolymer, the propylene-based polymer may be, for example, a copolymer of propylene and an $\alpha$-olefin(s) (but excluding propylene) having from 2 to 20 carbon atoms. Examples of the copolymer of propylene and an $\alpha$-olefin(s) having from 2 to 20 carbon atoms include propylene/ethylene copolymers, propylene/1-butene copolymers, propylene/ethylene/1-butene copolymers, propylene/4-methyl-1-pentene copolymers, and mixtures of these copolymers.
In a case in which the propylene-based polymer is a copolymer, the propylene-based polymer may be any one selected from the group consisting of a random copolymer, an alternating copolymer, a block copolymer, and a graft copolymer.
In a case in which the propylene-based polymer is a copolymer, the percentage of structural units derived from propylene in the propylene-based polymer may be designed as appropriate depending on the desired properties of the first modeling layer structure. For example, the percentage of structural units derived from propylene in the propylene-based polymer is preferably 50% by mole or more, more preferably from 70% by mole to 99.5% by mole, and still more preferably from 80% by mole to 98% by mole, with respect to 100% by mole of total structural units in the propylene-based polymer.
The propylene-based polymer may have an isotactic stereoregularity, a syndiotactic stereoregularity, or a mixture of these stereoregularities.
The content of the propylene-based polymer is preferably 95.0% by mass or more, more preferably 98.0% by mass or more, and still more preferably 99.9% by mass or more, with respect to 100% by mass of the total amount of the thermoplastic plastic.

The thermoplastic plastic has a crystallization temperature (Tc) whose upper limit value is preferably 140°C or lower, and more preferably 130°C or lower. The lower limit value of the crystallization temperature (Tc) of the thermoplastic plastic is preferably 90°C or higher, and more preferably 110°C or higher.

The crystallization temperature of the thermoplastic plastic is measured by a differential scanning calorimeter (DSC) at a temperature decrease rate of 10°C/min.

The thermoplastic plastic has a degree of crystallinity whose upper limit value is preferably 80% or less, and more preferably 75% or less. The lower limit value of the degree of crystallinity of the thermoplastic plastic is preferably 2% or more, and more preferably 5% or more.

The degree of crystallinity of the thermoplastic plastic is calculated from the heat of fusion derived from the melting of a main component of the thermoplastic plastic, in a heat flow curve obtained using a differential scanning calorimeter (DSC). The heat flow curve is obtained by maintaining the thermoplastic plastic under a nitrogen atmosphere at -40°C for 5 minutes, followed by heating at a rate of 10°C/min. Specifically, the heat flow curve is obtained by maintaining 5 mg of a sample under a nitrogen atmosphere at -40°C for 5 minutes, followed by heating at a rate of 10°C/min, using a differential scanning calorimeter (DSC-7, manufactured by The Perkin-Elmer Corporation). Degree of crystallinity is calculated from the heat of fusion derived from the melting of the main component, in the thus obtained heat flow curve, using the following equation:

$$\text{Degree of crystallinity} = (\Delta H / \Delta H0) \times 100\ (\%)$$

In the equation, $\Delta H$ represents the heat of fusion (J/g) determined from the curve of the heat of fusion derived from the melting of the main component of the thermoplastic plastic, and $\Delta H0$ represents the heat of fusion (J/g) of a perfect crystal of the main component. For example, the $\Delta H0$ is 293 J/g in a case in which the main component is ethylene, and the $\Delta H0$ is 210 J/g in a case in which the main component is propylene.

The upper limit value of the melting point of the thermoplastic plastic is preferably 200°C or lower, and more preferably 180°C or lower. The lower limit value of the melting point of the thermoplastic plastic is preferably 90°C or higher, and more preferably 110°C or higher.

The measurement of the melting point can be performed in the same manner as the method of measuring the melting point of the thermoplastic elastomer to be described later.

(1.3.2.2) Thermoplastic Elastomer

The thermoplastic elastomer has a rubber-like elasticity.

The thermoplastic elastomer is preferably a copolymer containing a structural unit derived from an α-olefin and a structural unit derived from another olefin different from the α-olefin.

In general, a single kind of α-olefin having from 2 to 20 carbon atoms, or a combination of two or more kinds thereof may be contained as the α-olefin(s). In particular, an α-olefin having 3 or more carbon atoms is preferred, and an α-olefin having from 3 to 8 carbon atoms is particularly preferred.

Examples of the α-olefin include 1-butene, 1-pentene, 1-hexene, 3-methyl-1-butene, 3,3-dimethyl-1-butene, 4-methyl-1-pentene, and 1-octene. One kind, or two or more kinds of α-olefins are used.

Among those mentioned above, 1-butene, 1-pentene, 1-hexene, and 4-methyl-1-pentene are preferred as the α-olefin, from the viewpoint of the ease of availability.

The other olefin different from the α-olefin is preferably an olefin having from 2 to 4 carbon atoms, and examples thereof include ethylene, propylene, and butene. In particular, the other olefin different from the α-olefin is more preferably an olefin having from 2 to 3 carbon atoms.

The definition of the copolymer as the thermoplastic elastomer includes an ethylene/α-olefin copolymer, a propylene/α-olefin copolymer, and a butene/α-olefin copolymer.

Examples of the thermoplastic elastomer include ethylene-propylene copolymers (EPR), ethylene/1-butene copolymers (EBR), ethylene/1-pentene copolymers, ethylene/1-octene copolymers (EOR), propylene/1-butene copolymers (PBR), propylene/1-pentene copolymers, and propylene/1-octene copolymers (POR).

In particular, the thermoplastic elastomer is preferably a copolymer containing a structural unit derived from an α-olefin having from 2 to 8 carbon atoms, and a structural unit derived from an olefin having from 2 to 3 carbon atoms. Further, a propylene-based elastomer is preferred, from the viewpoint that the elastomer is easily weldable with a thermoplastic plastic (particularly, a propylene-based polymer), and the deformation of the resulting first modeling layer structure is further reduced.

Further, the thermoplastic elastomer may be a random copolymer or a block copolymer containing a structural unit derived from such an α-olefin.

The melting point Tm of the thermoplastic elastomer is preferably from 30°C to 120°C.

When the melting point of the thermoplastic elastomer is from 30°C to 120°C, the thermoplastic elastomer acts as an adhesive between the first modeling layers formed by material extrusion. This leads to an improved adhesion strength between the first modeling layers.

The melting point is a value determined by differential scanning calorimetry (DSC), as the temperature Tm at the position of a melting peak that appears in an endothermic curve. The melting point is determined by the endothermic curve which is obtained when a sample is filled into an aluminum pan, heated to 230°C at a rate of 100°C/min, maintained at 230°C for 5 minutes, and then cooled to -70°C at a rate of -10°C/min, followed by heating at a rate of 10°C/min.

The thermoplastic elastomer preferably has a melt flow rate (MFR; 230°C, load: 2.16 kg) of 0.5 g/10 min or more, more preferably 1 g/10 min or more, still more preferably 2 g/10 min or more, and particularly preferably 5 g/10 min or more.

The upper limit value of the melt flow rate (MFR; 230°C, load: 2.16 kg) of the thermoplastic elastomer is preferably 70 g/10 min or less, more preferably 35 g/10 min or less, and still more preferably 30 g/10 min or less.

When the upper limit value and the lower limit value of the MFR of the thermoplastic elastomer are within the ranges described above, the deformation of the first modeling layer structure can be more effectively reduced.

The melt flow rate (MFR) is a value measured under the conditions of 230°C and a load of 2.16 kg in accordance with ASTM D1238-65T.

The thermoplastic elastomer has a Shore D hardness whose upper limit value is preferably 60 or less. The lower limit value of the Shore D hardness of the first thermoplastic elastomer is preferably 30 or more, more preferably 40 or more, and still more preferably 50 or more.

When the hardness of the thermoplastic elastomer, as the Shore D hardness, is 30 or more, the thermoplastic elastomer is less susceptible to deformation. In other words, the shape of the thermoplastic elastomer is more likely to be maintained. Therefore, it becomes easier for the thermoplastic elastomer to be introduced into a screw in a cylinder, when the first modeling layer structure is formed using the 3D printer to be described later. As a result, an improved discharge efficiency of the molten product of the first modeling layer material can be obtained. By this arrangement, a modeled object having an excellent appearance with smooth surface is more likely to be obtained.

The Shore D hardness is a value measured in accordance with the method described in ASTM D2240.

Specific examples of the thermoplastic elastomer include TAFMER (registered trademark) series manufactured by Mitsui Chemicals, Inc. (for example: TAFMER DF605, TAFMER DF610, TAFMER DF640, TAFMER DF710, TAFMER DF740, TAFMER DF7350, TAFMER DF810, TAFMER DF840, TAFMER DF8200, TAFMER DF940, TAFMER DF9200, TAFMER DF110, TAFMER H-0530S, TAFMER H-1030S, TAFMER H-5030S, TAFMER XM-7070, TAFMER XM-7080, TAFMER XM-7090, TAFMER BL2491M, TAFMER BL2481M, TAFMER BL3110M, TAFMER BL3450M, TAFMER MA8510, TAFMER MH7010, TAFMER MH7020, TAFMER MH5020, TAFMER PN-2070, and TAFMER PN-3560).

Among those mentioned above, TAFMER XM series, which is a series of propylene-based elastomers, is preferred, from the viewpoint that each elastomer of this series is easily weldable with a thermoplastic plastic (particularly, a propylene-based polymer), and the deformation of the resulting first modeling layer structure is further reduced.

The propylene-based elastomer of TAFMER XM series is easily weldable with a thermoplastic plastic (particularly, a propylene-based polymer), and allows for maintaining a rupture stress $\alpha$ required for the first modeling layer structure. This leads to an improved adhesion strength between the first modeling layers formed by material extrusion.

The thermoplastic elastomer is preferably a propylene-based elastomer. The propylene-based elastomer is a thermoplastic elastomer having at least propylene as a structural unit.

It is preferred that the thermoplastic elastomer is a propylene-based elastomer, and has a melting point of from 80°C to 120°C, a Shore D hardness of from 40 to 60, and an MFR of from 2 g/10 min to 20 g/10 min. This allows the first modeling layer structure to have a lower stress distortion, and to be less susceptible to warpage.

Examples of the propylene-based elastomer having a melting point of from 80°C to 120°C, a Shore D hardness of from 40 to 60, and an MFR of from 2 g/10 min to 20 g/10 min, include TAFMER XM-7090.

(1.3.3) Other Components

The first modeling layer material may contain any other components other than the thermoplastic resin and the inorganic filler. Examples of other components include ultraviolet absorbers, stabilizers, antioxidants, plasticizers, colorants, color adjusting agents, flame retardants, antistatic agents, fluorescent whitening agents, delustering agents, and impact strength modifiers.

(1.4) Second Modeling Layer Material

The second modeling layer material is a feedstock for the second modeling layer.

The second modeling layer material is different from the first modeling layer material.

The second modeling layer material preferably contains a second thermoplastic resin weldable with the first thermoplastic resin. By this arrangement, for example, the lowermost layer of the second modeling layer structure is more firmly welded to the uppermost layer of the first modeling layer structure.

Examples of the second thermoplastic resin include the same as those described as examples of the first thermoplastic resin. The second thermoplastic resin may be the same as, or different from, the first thermoplastic resin.

The second thermoplastic resin preferably contains a thermoplastic plastic and a thermoplastic elastomer. When the second thermoplastic resin contains a thermoplastic plastic and a thermoplastic elastomer, the deformation of the second modeling layer structure is more effectively reduced.

The content of the thermoplastic elastomer is preferably more than 0.1% by mass but less than 100% by mass, more preferably 10% by mass or more but less than 100% by mass, still more preferably from 10% by mass to 70% by mass, and particularly preferably from 20% by mass to 50% by mass, with respect to the total mass of the second modeling layer material.

The second modeling layer material may further contain an inorganic filler, from the viewpoints of achieving an increased affinity with the first modeling layer structure, and further reducing the warpage of the resulting modeled object. Examples of the inorganic filler to be contained in the second modeling layer material include the same as those described as examples of the inorganic filler to be contained in the first modeling layer material. The inorganic filler to be contained in the second modeling layer material may be the same as, or different from, the inorganic filler to be contained in the first modeling layer material.

In a case in which the second modeling layer material contains an inorganic filler, the content of the inorganic filler is preferably from 5% by mass to 70% by mass, more preferably more than 5% by mass but equal to or less than 55% by mass, and still more preferably more than 5% by mass but equal to or less than 45% by mass, with respect to the total mass of the second modeling layer material, from the viewpoint of further reducing the deformation (particularly warpage) of the second modeling layer structure.

In a case in which both of the first modeling layer material and the second modeling layer material contain an inorganic filler, the ratio (the inorganic filler in the first modeling layer material / the inorganic filler in the second modeling layer material) of the contents of the inorganic fillers in both materials, is preferably from 0.5 to 8, and more preferably from 1 to 4, for example, from the viewpoints of achieving an increased affinity with the first modeling layer structure, and further reducing the warpage of the resulting modeled object.

(1.5) Modeling Sheet

The modeling sheet is a sheet for fixing the resulting modeled object thereon.

The size of the modeling sheet can be adjusted as appropriate depending on the dimensions of the modeled object, and the like. The thickness of the modeling sheet is preferably from 0.01 mm to 10.00 mm, more preferably from 0.05 mm to 5.00 mm, and still more preferably from 0.10 mm to 3.00 mm.

The modeling sheet preferably contains a third thermoplastic resin weldable with the first thermoplastic resin. By this arrangement, the lowermost layer of the first modeling layer structure is more firmly welded to the modeling sheet.

Examples of the third thermoplastic resin include the same as those described as examples of the first thermoplastic resin. The third thermoplastic resin may be the same as, or different from, the first thermoplastic resin.

The modeling sheet 20 may further contain an inorganic filler. Examples of the inorganic filler to be contained in the modeling sheet 20 include the same as those described as examples of the inorganic filler to be contained in the first modeling layer material. The inorganic filler to be contained in the modeling sheet 20 may be the same as, or different from, the inorganic filler to be contained in the first modeling layer material.

At least one selected from the group consisting of the first thermoplastic resin, the second thermoplastic resin, and the third thermoplastic resin preferably contains a crystalline thermoplastic resin. By this arrangement, the balance between the mechanical strength and the impact resistance is improved. The crystalline thermoplastic resin includes a crystalline thermoplastic plastic.

Each of the first thermoplastic resin, the second thermoplastic resin, and the third thermoplastic resin preferably contains a crystalline thermoplastic resin. By this arrangement, the balance between the mechanical strength and the impact resistance is further improved.

The crystalline thermoplastic resin preferably contains a propylene-based polymer. By this arrangement, an excellent chemical resistance and weather stability can be obtained, in addition to an improved balance between the mechanical strength and the impact resistance.

(1.6) 3D Printer

The 3D printer materializes 3D model data, for example, based on a plurality of two-dimensional data, by extruding the molten product of the first modeling layer material through the first extrusion nozzle on the surface of the modeling sheet, and then extruding the second modeling layer material through the second extrusion nozzle on the resulting first modeling layer structure. The plurality of two-dimensional data is generated, for example, by cutting the 3D model data in round slices by slicer software. The plurality of two-dimensional data include, for example, G-code data.

The 3D printer may be a known apparatus.

The modeling stage has a placement surface. The placement surface is, for example, planar. The modeling stage includes, for example, an aluminum plate.

The modeling sheet is disposed on the placement surface of the modeling stage.

The modeling sheet is preferably fixed on the placement surface of the modeling stage. By this arrangement, the warpage of the first modeling layer structure is reduced by the fixing strength between the modeling stage and the modeling sheet, via the modeling sheet. Further, the warpage of the second modeling layer structure is reduced by the fixing strength between the modeling stage and the modeling sheet, via the modeling sheet and the first modeling layer structure. As a result, the warpage of the modeled object welded to the modeling sheet is further reduced.

The modeling sheet can be fixed to the placement surface of the modeling stage, for example, by a method using an adhesive, a double-sided adhesive tape, or the like. The temperature of the modeling stage is, for example, from 0°C to 150°C.

(1.7) Modeled Object

In one embodiment, a modeled object according to the first embodiment of the present disclosure (hereinafter, referred to as "first modeled object") includes a plurality of modeling layers disposed one on another in layers in the first direction. In the modeled object, the material of a surface modeling layer, which is a modeling layer located at one end in the first direction, of the plurality of modeling layers, is different from the material(s) of another modeling layer(s) (hereinafter, referred to as (an/the) "other modeling layer(s)") excluding the surface modeling layer.

The "first direction" refers to a direction in which the plurality of modeling layers are disposed one on another in layers.

The "surface modeling layer, which is a modeling layer located at one end in the first direction" refers to one modeling layer of the outermost layer of the plurality of modeling layers.

In the first modeled object, the warpage is reduced.

The fact that the material of the surface modeling layer is different from the material(s) of another modeling layer(s) means that the composition of components contained in the material of the surface modeling layer is different from that in the material(s) of the other modeling layer(s).

For example, it is regarded that the material of the surface modeling layer is different from the material(s) of another modeling layer(s), in a case in which at least one selected from the group consisting of the type and the incorporated amount of a resin contained in one material, the presence or absence of an inorganic filler in the material, and, when an inorganic filler is contained, the type and the incorporated amount of the inorganic filler, is different from that in the other material(s).

For example, a thermoplastic plastic and a thermoplastic elastomer are determined as different resin types, even in a case in which the resins contained in the respective materials both belong to thermoplastic resins, and the resins are polymers having structural units derived from the same monomer.

The surface modeling layer preferably contains a first thermoplastic resin and an inorganic filler.

Examples of the first thermoplastic resin in the first modeled object include the same as those described as examples of the first thermoplastic resin in the first production method. Examples of the inorganic filler in the first modeled object include the same as those described as examples of the inorganic filler in the first production method.

The lower limit value of the content of the inorganic filler in the surface modeling layer is preferably 25% by mass or more, more preferably 30% by mass or more, still more preferably 50% by mass or more, and particularly preferably 55% by mass or more, with respect to the total mass of the surface modeling layer. The upper limit value of the content of the inorganic filler in the surface modeling layer is preferably 80% by mass or less, more preferably 70% by mass or less, and still more preferably 65% by mass or less, with respect to the total mass of the surface modeling layer.

When the content of the inorganic filler is 25% by mass or more, the content of the first thermoplastic resin in the surface modeling layer is lower as compared to a case in which the content of the inorganic filler in the surface modeling layer is less than 25% by mass. Therefore, changes over time in the surface modeling layer due to of the first thermoplastic resin in the surface modeling layer are less likely to occur.

The first modeled object can be suitably produced by the first production method. In this case, the surface modeling layer corresponds to the first modeling layer structure in the first production method. In a case in which the first modeled object is produced by the first production method, the modeling sheet can be more easily separated from the first modeled object welded to the modeling sheet. Therefore, damage is less likely to occur in the first modeled object when the modeling sheet is separated from the first modeled object welded to the modeling sheet.

The size and the like of the first modeled object are not particularly limited, and can be selected as appropriate.

The thickness of the surface modeling layer of the first modeled object may be the same as the total thickness of the first modeling layer structure. Examples of the surface modeling layer include the same as those described as examples of the first modeling layer structure.

The other modeling layer(s) preferably contain(s) a second thermoplastic resin weldable with the first thermoplastic resin. This makes the surface modeling layer less likely to be detached from the other modeling layer(s).

Examples of the other modeling layer(s) include the same as those described as examples of the second modeling layer structure. Examples of the second thermoplastic resin in the first modeled object include the same as those described as examples of the second thermoplastic resin in the first production method.

(2) Second Embodiment

Next, a method of producing a modeled object according to a second embodiment of the present disclosure (hereinafter, referred to as "second production method") will be described.

In the second production method, the modeling sheet to be used contains an inorganic filler.

The second production method is a method of producing a modeled object by material extrusion using a 3D printer, the 3D printer including a modeling stage having a placement surface for placing the modeled object thereon.

The second production method includes forming (hereinafter, referred to as "additive manufacturing step") at least one modeling layer (hereinafter, referred to as "modeling layer structure") on the surface of a modeling sheet disposed on the placement surface of the modeling stage, using a molten product of a modeling layer material. The modeling layer material contains a first thermoplastic resin. The modeling sheet contains a second thermoplastic resin and an inorganic filler.

According to the second production method, it is possible to produce a modeled object whose warpage is reduced as compared to a case in which a modeling sheet is not used, and to separate the modeled object that has been welded to the modeling sheet from the modeling sheet in a shorter period of time. This is assumed to be due to the following reasons.

In the second production method, the modeling layer structure is formed on the surface of a modeling sheet disposed on the placement surface of the modeling stage, with the molten product of the modeling layer material. By this arrangement, the lowermost layer of the modeling layer structure is welded to the modeling sheet. In other words, the modeling layer structure and the modeling sheet are integrated. Further, the modeling sheet is disposed on the placement surface of the modeling stage. Therefore, the warpage of the modeling layer structure is reduced.

As a result, the occurrence of warpage in the modeled object obtained by the second production method is reduced as compared to a modeled object that has been formed by additive manufacturing directly on the placement surface of the modeling stage.

Moreover, the modeling sheet contains an inorganic filler, in the second production method. This makes the interlayer bond strength between the modeling sheet and the modeling layer structure to be relatively lower with respect to the interlayer bond strength of the modeling layer structure. Therefore, the modeling sheet can be more easily separated from the modeled object welded to the modeling sheet.

As a result, the modeled object that has been welded to the modeling sheet can be separated from the modeling sheet in a shorter period of time, in the second production method.

In this manner, the second production method enables to produce a modeled object whose warpage is reduced as compared to a case in which a modeling sheet is not used, and to separate the modeled object that has been welded to the modeling sheet from the modeling sheet in a shorter period of time.

(3.1) Additive Manufacturing Step

In the additive manufacturing step in the second production method, a modeling layer structure is formed on the surface of a modeling sheet disposed on the placement surface of the modeling stage, using a molten product of a modeling layer material. In this manner, a modeled object is obtained.

A 3D printer is used in the additive manufacturing step in the second production method. The 3D printer includes, for example, an extrusion nozzle, and a modeling stage. The modeling sheet is disposed on the placement surface of the modeling stage. The 3D printer may include one, or two or more extrusion nozzles. Examples of the extrusion nozzle include the same as those described as examples of the second extrusion nozzle in the first production method.

The additive manufacturing step in the second production method can be executed in the same manner as the second modeling layer forming step.

(3.2) Separation Step

The second production method may include a separation step.

In the separation step, the modeling sheet is separated from the modeled object welded to the modeling sheet, thereby obtaining the modeled object.

The method of separating the modeling sheet from the modeled object welded to the modeling sheet is not particularly limited. It is preferred to separate the modeling sheet from the modeled object welded to the modeling sheet by hand, by scraping the interface between the modeling sheet and the modeled object welded to the modeling sheet, using a scraper. In the second production method, the modeling sheet can be separated from the modeled object welded to the modeling sheet by hand using a scraper, in a shorter period of time.

(3.3) Modeling Layer Material

The modeling layer material is a feedstock for the modeling layer.

Examples of the modeling layer material include the same as those described as examples of the second modeling layer material in the first production method.

(3.4) Modeling Sheet

The modeling sheet is a sheet for fixing the resulting modeled object thereon.

The size of the modeling sheet can be adjusted as appropriate depending on the dimensions of the modeled object, and the like. The thickness of the modeling sheet is preferably from 0.01 mm to 10.00 mm, more preferably from 0.05 mm to 5.00 mm, and still more preferably from 0.10 mm to 3.00 mm.

The modeling sheet contains a second thermoplastic resin and an inorganic filler.

The second thermoplastic resin that is weldable with the first thermoplastic resin. By this arrangement, the lowermost layer of the modeling layer structure is more firmly welded to the surface of the modeling sheet.

Examples of the second thermoplastic resin in the second production method include the same as those described as examples of the first thermoplastic resin in the first production method.

In the second production method, the lower limit value of the content of the inorganic filler is preferably 25% by mass or more, more preferably 30% by mass or more, still more preferably 50% by mass or more, and particularly preferably 55% by mass or more, with respect to the total mass of the modeling layer material. The upper limit value of the content of the inorganic filler is preferably 80% by mass or less, more preferably 70% by mass or less, and still more preferably 65% by mass or less, with respect to the total mass of the modeling layer material.

When the lower limit value of the content of the inorganic filler in the modeling sheet is 25% by mass or more, the interlayer bond strength between the modeling layer structure and the modeling sheet is lower as compared to a case in which the lower limit value of the content of the inorganic filler in the modeling sheet is less than 25% by mass. Therefore, it is easier to scrape the interface between the modeling sheet and the modeled object, using a scraper. As a result, the modeling sheet can be more easily separated from the modeled object welded to the modeling sheet.

When the upper limit value of the content of the inorganic filler in the modeling sheet is 80% by mass or less, the inorganic filler is less likely to be detached from the modeling sheet.

Examples of the inorganic filler include the same as those described as examples of the inorganic filler to be contained in the first modeling layer material in the first production method.

Examples

The present disclosure will now be described more specifically with reference to Examples. However, the present disclosure is not limited to the following Examples as long as the gist of the present disclosure is not deviated. In the following description, the "part(s)" is based on mass, unless otherwise specified.

- Preparation of Materials -

The details of the materials used in the present Examples are as follows.

(Thermoplastic Elastomer)

· XM7090: "TAFMER (registered trademark) XM-7090" (manufactured by Mitsui Chemicals, Inc.; material: propylene-based polymer, melting point Tm: 98°C, Shore D hardness: 58, MFR: 7.0 g/min, tensile elastic modulus at 25°C: less than $6.0 \times 10^8$ Pa)

The value of each of the melting point Tm, the Shore D hardness, and the MFR is a catalog value.

(Thermoplastic Plastic)

· J105G: "PRIME POLYPRO (registered trademark) J-105G" (manufactured by Prime Polymer Co., Ltd.; material: propylene homopolymer, crystallization temperature Tc: 116.4°C, degree of crystallinity: 52.2%, tensile elastic modulus at 25°C: $6.0 \times 10^8$ Pa or more)

The value of each of the crystallization temperature Tc and the Shore D hardness is a catalog value.

(Material containing Inorganic Filler)

· Talc: volume average particle size: from 5 μm to 10 μm
· HG170 (manufactured by ASADA MILLING CO., LTD.; form: master batch, constituent materials: talc and thermoplastic plastic, type of thermoplastic plastic: propylene-based polymer, content of talc: 70% by mass)
· A material (referred to as GAT40MB50) in which "GAT40" and a propylene-based polymer are kneaded to prepare a master batch such that the content of "GAT40" therein is 50% by mass (manufactured by NIPPON TALC CO., LTD.; form: master batch, constituent materials: talc and thermoplastic plastic, type of thermoplastic plastic: propylene-based polymer, content of talc: 50% by mass)
· A material (referred to as GAT40MB60) in which "GAT40" and a propylene-based polymer are kneaded to prepare a master batch such that the content of "GAT40" therein is 60% by mass (manufactured by NIPPON TALC CO., LTD.; form: master batch, constituent materials: talc and thermoplastic plastic, type of thermoplastic plastic: propylene-based polymer, content of talc: 60% by mass)

The content of "GAT40" refers to the mass of "GAT40" with respect to the total mass of the master batch. The content of talc refers to the mass of talc with respect to the total mass of the master batch.

· 2080K (manufactured by Takehara Chemical Industrial Co., Ltd.; form: master batch, constituent materials: calcium carbonate and thermoplastic plastic, type of thermoplastic plastic: propylene-based polymer, content of calcium carbonate: 80% by mass)
· WF-70N-1 (manufactured by ASADA MILLING CO., LTD.; form: master batch, constituent materials: magnesium sulfate and thermoplastic plastic, type of thermoplastic plastic: propylene-based polymer, content of magnesium sulfate: 70% by mass)

(Modeling Sheet)

· PP sheet: "Highly Transparent PP sheet" (manufactured by Johoku Co., Ltd.; material: propylene-based polymer, form: sheet, thickness: 0.25 mm)

[Example 1]

(Additive Manufacturing Step)

A double-sided adhesive tape ("No. 5000NS"; manufactured by Nitto Denko Corporation) was pasted on the modeling stage (material: aluminum plate) of a material extrusion 3D printer (GEM444D; manufactured by S-Lab Corporation). Thereafter, the PP sheet was pasted on the surface of the double-sided adhesive tape that had been pasted on the modeling stage. The entire surface of the PP sheet on the side of the modeling stage was in contact with the double-sided adhesive tape. In this manner, the PP sheet was fixed on the modeling stage.

Subsequently, the first modeling layer material shown in Table 1 was introduced into a first hopper, and the first modeling layer material was supplied into a first cylinder via the first hopper. The first modeling layer material was then heated to a temperature of from 180°C to 240°C by a first heater provided to the first cylinder, to allow the first modeling layer material to melt.

The second modeling layer material containing the components shown below and in Table 2 was introduced into a second hopper, and the second modeling layer material was supplied into a second cylinder via the second hopper. The second modeling layer material was then heated to a temperature of from 180°C to 240°C by a second heater provided to the second cylinder, to allow the second modeling layer material to melt.

< Components of Second Modeling Layer Material >

· "J105G" (thermoplastic plastic): 40% by mass
· "XM7090" (thermoplastic elastomer): 40% by mass
· "Talc" (inorganic filler): 20% by mass

Next, the following 3D model data was cut in round slices using application software ("Simplify3D"; manufactured by Simplify3D, Inc.), to generate a plurality of two-dimensional data. Based on the plurality of two-dimensional data, setting parameters of the application software were set as shown below.
Subsequently, the molten product of the first modeling layer material was extruded on the surface of the PP sheet through the first extrusion nozzle (nozzle diameter: 3 mm), based on the two-dimensional data, to form a first modeling layer structure. At this time, the lowermost layer of the first modeling layer structure had been welded to the PP sheet.
Thereafter, the molten product of the second modeling layer material was extruded on the surface of the resulting first modeling layer through the first extrusion nozzle, based on the two-dimensional data. Then the molten product of the second modeling layer material was extruded on the surface of the resulting second modeling layer through the second extrusion nozzle, and the second modeling layers were sequentially layered, to form a second modeling layer structure. At this time, the lowermost layer of the second modeling layer structure had been welded to the uppermost layer of the first modeling layer structure.
In this manner, a honeycomb-modeled object 40 for measurement that had been welded to the PP sheet was obtained. The PP sheet and the honeycomb-modeled object 40 for measurement that has been welded to the PP sheet, are hereinafter collectively referred to as "welded body for measurement".
The modeling stage was removed from the 3D printer, and the welded body for measurement fixed to the modeling stage was left to stand, to cool the welded body for measurement to room temperature. In the welded body for measurement, the entire lower surface (shape: rectangle, size: 250 mm D × 100 mm W) of the honeycomb-modeled object 40 for measurement had been welded to the PP sheet.

< 3D Model Data >

· A rectangular parallelepiped having a size of 250 mm D × 100 mm W × 16 mm H

< Setting Parameters for First Modeling Layer >

· Nozzle to be used: first extrusion nozzle
· Modeling speed: 3,000 mm/min
· Nozzle temperature: 240°C
· Lamination pitch: 1.5 mm
· Number of layers: one
· Filling rate: 100%
· Filling pattern: solid
· Temperature of modeling stage: 60°C

< Setting Parameters for Bottom Portion (Lowermost Layer) of Second Modeling Layer

· Nozzle to be used: first extrusion nozzle

· Modeling speed: 3,000 mm/min
· Nozzle temperature: 240°C
· Lamination pitch: 1.5 mm
· Number of layers: one
· Filling rate: 100%
· Filling pattern: solid
· Temperature of modeling stage: 60°C

< Setting Parameters for Honeycomb Structure Portion 41 of Second Modeling Layer >

· Nozzle to be used: second extrusion nozzle
· Modeling speed: 3,000 mm/min
· Nozzle temperature: 240°C
· Lamination pitch: 1.5 mm
· Filling rate: 30%
· Filling pattern: honeycomb
· Temperature of modeling stage: 60°C

< Setting Parameters for Rectangular Parallelepiped-shaped Frame Portion 42 of Second Modeling Layer >

· Extrusion nozzle to be used: second extrusion nozzle
· Modeling speed: 3,000 mm/min
· Nozzle temperature: 240°C
· Lamination pitch: 1.5 mm
· Filling rate: 100%
· Filling pattern: solid
· Temperature of modeling stage: 60°C

(Separation Step)

- Measurement of Separation Time -

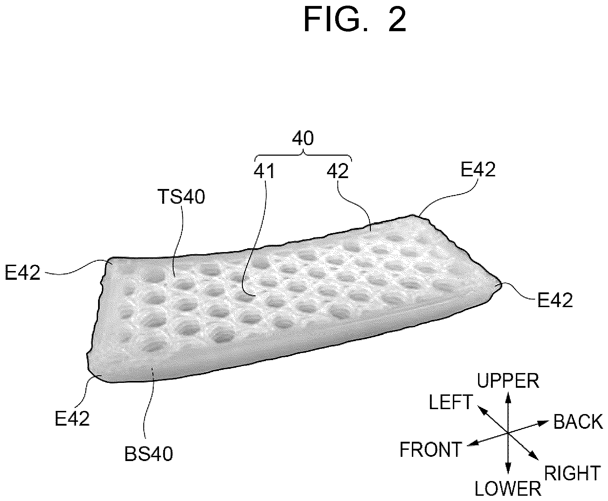

The interface between the PP sheet and the honeycomb-modeled object 40 for measurement, of the welded body for measurement that had been cooled to room temperature, was scraped using a scraper ("GOLD SPATULA 100 mm"; manufactured by Industry Kowa Co., Ltd.), and the honeycomb-modeled object 40 for measurement was separated from the PP sheet of the welded body for measurement by hand.
Specifically, an operation in which the interface (hereinafter, referred to as "interface") between the PP sheet and the honeycomb-modeled object 40 for measurement, of the welded body for measurement, is scraped with the scraper to cause delamination at the interface, and the scraper is inserted little by little between the PP sheet and the honeycomb-modeled object 40 for measurement, of the welded body for measurement, was repeated. In this operation, a hammer was used, if necessary. In this manner, the honeycomb-modeled object 40 for measurement as shown in FIG. 2 was separated from the PP sheet of the welded body for measurement. When the PP sheet from which the honeycomb-modeled object 40 for measurement had been separated was visually observed, no rupture due to the insertion of the scraper was observed in the PP sheet.
Further, the separation time required from the start of the operation of the separation step until the honeycomb-modeled object 40 for measurement had been separated from the PP sheet of the welded body for measurement, was measured. The measured result of the separation time is shown in Table 3. The separation time is a period of time required for the above-described operation to be completed by one adult.
The separation time has an acceptable range within 3,600 seconds.
The size of the honeycomb-modeled object 40 for measurement was 250 mm D × 100 mm W × 16 mm H. As shown in FIG. 2, the honeycomb-modeled object 40 for measurement is composed of a honeycomb structure portion 41 and a rectangular parallelepiped-shaped frame portion 42. The honeycomb structure portion 41 is located inside the rectangular parallelepiped-shaped frame portion 42. The honeycomb structure portion 41 and the rectangular parallelepiped-shaped frame portion 42 had been integrated. The honeycomb-modeled object 40 for measurement was a roughly rectangular parallelepiped-shaped object.

The rectangular parallelepiped-shaped frame portion 42 had been formed so as to surround the peripheral portion of the honeycomb structure portion 41 in a direction orthogonal to a vertical direction (see FIG. 2). The rectangular parallelepiped-shaped frame portion 42 had a filling rate of 100%. The rectangular parallelepiped-shaped frame portion 42 had a size of 250 mm × 100 mm × 16 mm height. Specifically, in FIG. 2, the length of the rectangular parallelepiped-shaped frame portion 42 in a fore-and-aft direction was 250 mm. The length of the rectangular parallelepiped-shaped frame portion 42 in a right-and-left direction was 100 mm. The length thereof in the vertical direction was 16 mm. The rectangular parallelepiped-shaped frame portion 42 was composed of four plate portions. Each of the four plate portions had a thickness of 5 mm.

The honeycomb structure portion 41 had a honeycomb structure. The filling rate of the honeycomb structure portion 41 was 30%.

- Measurement of Average Amount of Curvature -

The average amount of curvature (mm) of the honeycomb-modeled object 40 for measurement was measured as follows. The average amount of curvature Y of the honeycomb-modeled object 40 for measurement refers, when the honeycomb-modeled object 40 for measurement is placed on a surface plate 50, to the arithmetic mean value of the amounts of float-up $Y_A$ (namely, the heights of the corners curved upward to be floated from the surface plate) of the four corners of the rectangular parallelepiped-shaped frame portion 42 from the surface plate 50.

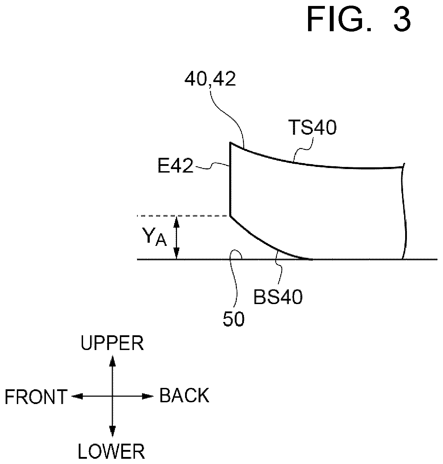

As shown in FIG. 3, the honeycomb-modeled object 40 for measurement was placed on the surface of the surface plate 50 such that a first surface TS40 of the honeycomb-modeled object 40 for measurement faced upward. Subsequently, the highest height of a lower surface BS40 of each corner portion E42 of the honeycomb-modeled object 40 for measurement, from the surface of the surface plate 50, was measured using a height gauge. The thus obtained measured value indicates the amount of float-up $Y_A$ of each corner portion E42 of the rectangular parallelepiped-shaped frame portion 42.

The average amount of curvature Y of the honeycomb-modeled object 40 for measurement was calculated by adding the respective amounts of float-up $Y_A$ of the four corners of the honeycomb-modeled object 40 for measurement, which had been measured as described above, and dividing the resulting added value by 4. The measured result is shown in Table 3.

The acceptable range of the average amount of curvature is 4.0 mm or less.

(Example 2 to Example 10, and Comparative Example 1)

A welded body for measurement was obtained in the same manner as in Example 1 for each of Examples and Comparative Example, except that the components of the first modeling layer material and the second modeling layer material were changed as shown in Tables 1 and 2. A honeycomb-modeled obj ect 40 for measurement was separated from the PP sheet of each resulting welded body for measurement. The measured result of the separation time in the separation step in each of Examples and Comparative Example is shown in Table 3.

When each PP sheet from which the honeycomb-modeled object 40 for measurement had been separated was visually observed, no rupture due to the insertion of the scraper was observed in the PP sheet of each of Examples 2 to 5, 7, 9 and 10. In the PP sheet of each of Example 6 and Example 8, rupture due to the insertion of the scraper was partially observed, but it was within the acceptable range. In the PP sheet of Comparative Example 1, rupture due to the insertion of the scraper was observed.

Further, the average amount of curvature of each honeycomb-modeled object 40 for measurement that had been separated was measured in the same manner as in Example 1. The measured results of the average amount of curvature are shown in Table 3.

[Table 1]

| | First modeling layer material | | | | | | | | |
|---|---|---|---|---|---|---|---|---|---|
| | Material containing inorganic filler | | | | First thermoplastic resin | | | | |
| | | | | | Thermoplastic plastic | | Thermoplastic elastomer | | |
| | Content of inorganic filler (% by mass) | Type | First thermoplastic resin contained in material | Incorporated amount of material (part(s) by mass) | Type | Incorporated amount (part(s) by mass) | Type | Incorporated amount (part(s) by mass) | Resin component |
| Example 1 | 70 | HG170 | Propylene-based polymer | 100 | - | - | - | - | Propylene-based polymer |
| Example 2 | 60 | GAT40MB60 | Propylene-based polymer | 100 | - | - | - | - | Propylene-based polymer |
| Example 3 | 50 | HG170 | Propylene-based polymer | 71.4 | J105G | 28.6 | - | - | Propylene-based polymer |
| Example 4 | 50 | GAT40MB50 | Propylene-based polymer | 100 | - | - | - | - | Propylene-based polymer |
| Example 5 | 35 | HG170 | Propylene-based polymer | 50 | J105G | 50 | - | - | Propylene-based polymer |
| Example 6 | 25 | GAT40MB50 | Propylene-based polymer | 50 | J105G | 50 | - | - | Propylene-based polymer |
| Example 7 | 80 | 2080K | Propylene-based polymer | 100 | - | - | - | - | Propylene-based polymer |
| Example 8 | 40 | 2080K | Propylene-based polymer | 50 | J105G | 50 | - | - | Propylene-based polymer |

(continued)

| | First modeling layer material | | | | | | | | |
|---|---|---|---|---|---|---|---|---|---|
| | Material containing inorganic filler | | | | First thermoplastic resin | | | | |
| | Content of inorganic filler (% by mass) | Type | First thermoplastic resin contained in material | Incorporated amount of material (part(s) by mass) | Thermoplastic plastic | | Thermoplastic elastomer | | Resin component |
| | | | | | Type | Incorporated amount (part(s) by mass) | Type | Incorporated amount (part(s) by mass) | |
| Example 9 | 70 | WF-70N-1 | Propylene-based polymer | 100 | - | - | - | - | Propylene-based polymer |
| Example 10 | 35 | WF-70N-1 | Propylene-based polymer | 50 | J105G | 50 | - | - | Propylene-based polymer |
| Comparative Example 1 | 20 | Talc | - | 20 | J105G | 40 | XM7090 | 40 | Propylene-based polymer |

[Table 2]

| | Second layer material | | | | | | | | |
|---|---|---|---|---|---|---|---|---|---|
| | Material containing inorganic filler | | | | modeling Second thermoplastic resin | | | | |
| | | | | | Thermoplastic plastic | | Thermoplastic elastomer | | |
| | Content of inorganic filler (% by mass) | Type | Second thermoplastic resin contained in material | Incorporated amount of material (part(s) by mass) | Type | Incorporated amount (part(s) by mass) | Type | Incorporated amount (part(s) by mass) | Resin component |
| Example 1 | 20 | Talc | - | 20 | J105G | 40 | XM7090 | 40 | Propylene-based polymer |
| Example 2 | 20 | Talc | - | 20 | J105G | 40 | XM7090 | 40 | Propylene-based polymer |
| Example 3 | 20 | Talc | - | 20 | J105G | 40 | XM7090 | 40 | Propylene-based polymer |
| Example 4 | 20 | Talc | - | 201 | J105G | 40 | XM7090 | 40 | Propylene-based polymer |
| Example 5 | 20 | Talc | - | 20 | J105G | 40 | XM7090 | 40 | Propylene-based polymer |
| Example 6 | 20 | Talc | - | 20 | J105G | 40 | XM7090 | 40 | Propylene-based polymer |
| Example 7 | 20 | Talc | - | 20 | J105G | 40 | XM7090 | 40 | Propylene-based polymer |
| Example 8 | 20 | Talc | - | 20 | J105G | 40 | XM7090 | 40 | Propylene-based polymer |

(continued)

| | Second layer material | | | | | | | | |
|---|---|---|---|---|---|---|---|---|---|
| | Material containing inorganic filler | | | | modeling Second thermoplastic resin | | | | |
| | Content of inorganic filler (% by mass) | Type | Second thermoplastic resin contained in material | Incorporated amount of material (part(s) by mass) | Thermoplastic plastic | | Thermoplastic elastomer | | Resin component |
| | | | | | Type | Incorporated amount (part(s) by mass) | Type | Incorporated amount (part(s) by mass) | |
| Example 9 | 20 | Talc | - | 20 | J105G | 40 | XM7090 | 40 | Propylene-based polymer |
| Example 10 | 20 | Talc | - | 20 | J105G | 40 | XM7090 | 40 | Propylene-based polymer |
| Comparative Example 1 | 20 | Talc | - | 20 | J105G | 40 | XM7090 | 40 | Propylene-based polymer |

[Table 3]

| | Sameness or difference between first modeling layer material and second modeling layer material | Modeling sheet | Measured results | |
|---|---|---|---|---|
| | | Third thermoplastic resin | Separation step | Honeycomb-modeled object for measurement |
| | | Resin component | Separation time (sec) | Average amount of curvature (mm) |
| Example 1 | A | Propylene-based polymer | 76 | 3.5 |
| Example 2 | A | Propylene-based polymer | 195 | 3.0 |
| Example 3 | A | Propylene-based polymer | 535 | 3.1 |
| Example 4 | A | Propylene-based polymer | 736 | 3.2 |
| Example 5 | A | Propylene-based polymer | 943 | 2.8 |
| Example 6 | A | Propylene-based polymer | 1502 | 2.5 |
| Example 7 | A | Propylene-based polymer | 906 | 2.9 |
| Example 8 | A | Propylene-based polymer | 1893 | 2.1 |
| Example 9 | A | Propylene-based polymer | 31 | 3.3 |
| Example 10 | A | Propylene-based polymer | 263 | 2.6 |
| Comparative Example 1 | B | Propylene-based polymer | > 3600 | 2.0 |

In the tables, the "Content of inorganic filler" shows the content of the inorganic filler with respect to the total amount of the first modeling layer material or the second modeling layer material. In Table 1, each of "HG170", "GAT40MB60" and "GAT40MB50" in the section of "Material containing inorganic filler" contains talc (inorganic filler) and a propylene-based polymer (thermoplastic plastic). In the column of "Sameness or difference with first modeling layer material" In Table 3, "A" indicates that the first modeling layer material is different from the second modeling layer material, and "B" indicates that the first modeling layer material is the same as the second modeling layer material.

The method of producing the modeled objects of Example 1 to Example 10 includes the first modeling layer forming step and the second modeling layer forming step. The first modeling layer material is different from the second modeling layer material.

Therefore, the separation time was within 3,600 seconds in each of Example 1 to Example 10. Further, the average amount of curvature of the honeycomb-modeled object 40 for measurement was 4.0 mm or less. In other words, it has been found out that the method of producing the modeled objects of Example 1 to Example 10 enables to produce a modeled object whose warpage is reduced as compared to a case in which a modeling sheet is not used, and to separate the modeled object that has been welded to the modeling sheet from the modeling sheet in a shorter period of time.

Particularly, in the method of producing the modeled objects of Examples 2 to 5, 7, 9, and 10, the first modeling layer material, the second modeling layer material and the PP sheet are welded to one another. The method of producing the modeled objects of Examples 2 to 5, 7, 9, and 10 described above resulted in a separation time within 1,200 seconds. Further, the average amount of curvature of the honeycomb-modeled object 40 for measurement was 4.0 mm or less in each Example. In other words, it has been found out that the balance between the separation time and the average amount of curvature of the resulting modeled object is further improved.

The method of producing the modeled object of Comparative Example 1 includes the first modeling layer forming step and the second modeling layer forming step. The first modeling layer material was the same as the second modeling layer material.

Therefore, while the average amount of curvature of the honeycomb-modeled object 40 for measurement was 4.0 mm or less in Comparative Example 1, the separation time was more than 3,600 seconds. In other words, it has been found out that the method of producing the modeled object of Comparative Example 1 is capable of producing a modeled object whose warpage is reduced as compared to a case in which a modeling sheet is not used, but is difficult to separate the modeled object that has been welded to the modeling sheet from the modeling sheet in a short period of time.

The disclosure of Japanese Patent Application No. 2020-200639 filed on December 2, 2020 is incorporated herein by reference in their entirety. All publications, patent applications, and technical standards mentioned in the present specification are incorporated herein by reference to the same extent as if each individual publication, patent application, or technical standard was specifically and individually indicated to be incorporated by reference.

## Claims

**1.** A method of producing a modeled object by material extrusion using a 3D printer, the 3D printer comprising a modeling stage having a placement surface for placing the modeled object thereon, the method comprising:

forming at least one first modeling layer on a surface of a modeling sheet disposed on the placement surface, using a molten product of a first modeling layer material; and
forming at least one second modeling layer on the at least one first modeling layer, using a molten product of a second modeling layer material,
wherein the first modeling layer material is different from the second modeling layer material.

**2.** The method of producing a modeled object according to claim 1, wherein the first modeling layer material comprises a first thermoplastic resin and an inorganic filler.

**3.** The method of producing a modeled object according to claim 2, wherein a content of the inorganic filler is from 25% by mass to 80% by mass with respect to a total mass of the first modeling layer material.

**4.** The method of producing a modeled object according to claim 2 or claim 3, wherein the second modeling layer material comprises a second thermoplastic resin that is weldable with the first thermoplastic resin.

**5.** The method of producing a modeled object according to any one of claims 2 to 4, wherein the modeling sheet comprises a third thermoplastic resin that is weldable with the first thermoplastic resin.

**6.** The method of producing a modeled object according to any one of claims 2 to 5, wherein:

the first modeling layer material comprises the first thermoplastic resin,
the second modeling layer material comprises a second thermoplastic resin that is weldable with the first thermoplastic resin,
the modeling sheet comprises a third thermoplastic resin that is weldable with the first thermoplastic resin, and
at least one selected from the group consisting of the first thermoplastic resin, the second thermoplastic resin, and the third thermoplastic resin comprises a crystalline thermoplastic resin.

**7.** The method of producing a modeled object according to claim 6, wherein the crystalline thermoplastic resin comprises a propylene-based polymer.

**8.** A method of producing a modeled object by material extrusion using a 3D printer, the 3D printer comprising a modeling stage having a placement surface for placing the modeled object thereon, the method comprising:
forming at least one modeling layer on a surface of a modeling sheet disposed on the placement surface, using a molten product of a modeling layer material, wherein:

the modeling layer material comprises a first thermoplastic resin, and
the modeling sheet comprises a second thermoplastic resin and an inorganic filler.

9. The method of producing a modeled object according to claim 8, wherein a content of the inorganic filler is from 25% by mass to 80% by mass with respect to a total mass of the modeling sheet.

10. The method of producing a modeled object according to claim 8 or claim 9, wherein the second thermoplastic resin is weldable with the first thermoplastic resin.

11. The method of producing a modeled object according to any one of claims 2 to 10, wherein the inorganic filler comprises at least one selected from the group consisting of talc, calcium carbonate, and magnesium sulfate.

12. A modeled object, comprising a plurality of modeling layers disposed one on another in layers in a first direction, wherein a material of a surface modeling layer, which is a modeling layer located at one end in the first direction, of the plurality of modeling layers, is different from a material of another modeling layer excluding the surface modeling layer.

13. The modeled object according to claim 12, wherein the surface modeling layer comprises a first thermoplastic resin and an inorganic filler.

14. The modeled object according to claim 13, wherein a content of the inorganic filler is from 25% by mass to 80% by mass with respect to a total mass of the surface modeling layer.

15. The modeled object according to claim 13 or claim 14, wherein the other modeling layer comprises a second thermoplastic resin that is weldable with the first thermoplastic resin.

FIG.1

12
12
10
TS11
11
S20,BS11
20
S30
30

FIG. 2

40
41
42
E42
TS40
E42
E42
E42
BS40
UPPER
LEFT
BACK
FRONT
RIGHT
LOWER

FIG. 3

40,42
TS40
E42
$Y_A$
BS40
50
UPPER
FRONT
BACK
LOWER

## INTERNATIONAL SEARCH REPORT

International application No. **PCT/JP2021/043062**

**A. CLASSIFICATION OF SUBJECT MATTER**

***B33Y 10/00***(2015.01)i; ***B33Y 80/00***(2015.01)i; ***B29C 64/106***(2017.01)i; ***B29C 64/40***(2017.01)i
FI: B29C64/106; B33Y10/00; B29C64/40; B33Y80/00

According to International Patent Classification (IPC) or to both national classification and IPC

**B. FIELDS SEARCHED**

Minimum documentation searched (classification system followed by classification symbols)

B33Y10/00; B33Y80/00; B29C64/106; B29C64/40

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-131685 A (SEIKO EPSON CORP) 31 August 2020 (2020-08-31) paragraphs [0042], [0043], [0051], [0053], fig. 8 | 1-15 |
| A | WO 2017/187800 A1 (NITTO DENKO CORP) 02 November 2017 (2017-11-02) paragraphs [0002], [0007], [0024], [0032], tables 1-2 | 1-15 |
| A | JP 2020-163671 A (HOTTY POLYMER CO LTD) 08 October 2020 (2020-10-08) paragraphs [0019], [0022] | 1-15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 December 2021** | **28 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/043062**

| Patent document cited in search report | Publication date (day/month/year) | Patent family member(s) | Publication date (day/month/year) |
|---|---|---|---|
| JP 2020-131685 A | 31 August 2020 | US 2020/0269491 A1<br>paragraphs [0050], [0051], [0062], [0065], fig. 8<br>CN 111605184 A | |
| WO 2017/187800 A1 | 02 November 2017 | US 2021/0179893 A1<br>paragraphs [0002], [0010], [0047], [0055], tables 1-2<br>EP 3450143 A<br>CN 109070470 A | |
| JP 2020-163671 A | 08 October 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017502852 A
- JP 2020200639 A